# EUROPEAN PATENT APPLICATION

(11) **EP 4 484 052 A1**
(43) Date of publication of application: **01.01.2025**
(21) Application number: 23182434.3
(22) Date of filing: 29.06.2023
(51) Int. Cl.: B23P 15/24, B21D 1/00, B21D 22/00, B21D 37/20, B23C 3/20, B23K 26/36, B44B 5/02, G05B 19/19, G05B 19/401, B23P 23/04

(54) **A METHOD OF MANUFACTURING A STAMPING TOOL HAVING A STRUCTURE**

(71) Applicant: GF Machining Solutions AG, 1217 Meyrin (CH)
(72) Inventor: Meyer, Yvan, 2054 Chézard-St-Martin (CH)
(74) Representative: Li Schrag, Yue

(57) **Abstract**

The present invention is related to a method of manufacturing a stamping tool having a structure, in particular a stamping tool for producing a bipolar plate for a fuel cell. The method comprises the following steps:
a. defining for the structure a target geometry and an intermediate geometry, wherein the intermediate geometry defines the geometry of an intermediate part, which requires further machining to achieve the target geometry;
b. mounting a workpiece in a machine tool;
c. machining the workpiece by a first type of machining based on the defined intermediate geometry to obtain the intermediate part;
d. measuring the geometry of the machined intermediate part by a measuring device to obtain geometry data of the machined intermediate part;
e. determining a geometry deviation data representing the difference between the machined intermediate part geometry and the target geometry based on the measured geometry data and the defined target geometry by a processing unit;
f. computing a machining path based on the determined geometry deviation data by the processing unit; and
g. selectively machining the structure of the intermediate part by a second type of machining different than the first type of machining in accordance with the computed machining path to obtain a final part having the structure with the target geometry by removing the material on the intermediate part to eliminate the difference between the machined intermediate part geometry and the target geometry.

## Description

### FIELD OF THE INVENTION

The present invention is related to a method of manufacturing a stamping tool having a structure. In further, the present invention is related to a system of manufacturing a stamping tool having a structure.

### BACKGROUND OF INVENTION

These days, new energy source is getting more and more important, because it can contribute on the improvement of the climate change. One of the new energy source is based on the proton exchange membrane (PEM) fuel cell. This technology is considered as a promising technology for power generation for transportation system such as E-mobility, as it can prevent the environment and provide a high energy density.

The bipolar plates are considered as a key component of such fuel cells. It functions as a carry plate for two poles required for the fuel cell, namely the negatively-charged anode plate carrying H2 and the positively-charged cathode carrying O2. Different materials can be used for bipolar plates, such as graphite, composite and metal. Compared with the other two materials, metal has the advantage of featuring good electrical conductivity, high mechanical strength and low production costs. Until now, many methods have been developed to manufacture the metal bipolar plates. The known methods are: roll forming, hydroforming, rubber pad forming and stamping.

WO 2008/034818 discloses a device for production of a bipolar plate of a fuel cell. The device comprises a reactor in which the workpiece forms a first electrode and a tool forms the second electrode. The workpiece and the tool are connected in an electrically conductive manner by an electrolyte and at least temporarily an electric potential difference is formed between the workpiece and the tool. The poles of the workpiece and the tool can be reversed regarding their mode of action as a cathode or anode for performing a removal process on the workpiece, generating a structure on the surface of the workpiece, and a coating process for applying a coating onto the workpiece in direct succession in the reactor.

However, it is still a challenge to develop a method, which is suitable for mass production. Among these methods, stamping process is a favorable process for many manufactures because of its machining efficiency. For mass production, it is relevant to find an efficient way to produce bipolar plates with high quality. For stamping process, it is crucial to have a stamping tool with a very high accuracy and good surface finishing.

Typically, the stamping tool is machined by a machine tool. Especially, milling is applied. This process has the advantage of high surface quality and fast machining. However, the machining precision has a limit. In particular, the stamping tool comprises a plurality of tiny structures. The accuracy of the tiny structure must be very high. Such accuracy is very difficult to be achieved by milling.

### SUMMARY OF THE INVENTION

It is an objective of this invention to provide a method for manufacturing a stamping tool having a structure with a high surface quality and high accuracy. In particular, it is an objective to provide a method of manufacturing a stamping tool having a structure with improved machining sufficiency.

According to the present invention, these objectives are achieved through the features of independent claims. In addition, further advantageous embodiments follow from the dependent claims and the description.

The present invention is directed to a method for manufacturing a stamping tool having a structure, in particular a stamping tool for producing a bipolar plate for a fuel cell. The method comprises the following steps: defining a target geometry and an intermediate geometry for the structure, wherein the intermediate geometry defines the geometry of an intermediate part, which requires further machining to achieve the target geometry; mounting a workpiece in a machine tool; machining the workpiece by a first type of machining based on the defined intermediate geometry to obtain the intermediate part; measuring the geometry of the machined intermediate part by a measuring device to obtain geometry data of the intermediate part; determining a geometry deviation data representing the difference between the machined intermediate part geometry and the target geometry based on the measured geometry data and the defined target geometry data by a processing unit; computing a machining path based on the determined geometry deviation data by the processing unit; and selectively machining the structure of the intermediate part by a second type of machining different than the first type of machining in accordance with the computed machining path to obtain a final part having the structure with the target geometry by removing the material on the intermediate part to eliminate the difference between the machined intermediate part geometry and the target geometry.

Preferably, the first type of machining is milling and the second type of machining is laser-ablating machining.

Alternatively, the first type of machining is an electrical discharge machining, an electrical discharge chemical etching or an electro-chemical etching.

The accuracy of the stamping tool, in particular the accuracy of the structure formed on the stamping tool has a direct impact on the accuracy of the parts produced by stamping. Thus, it is essential to manufacture the structure with a high accuracy. However, the machining time can be increased, if the high accuracy is required. Combining different types of machining processes can benefit from the advantages of both machining processes to optimize the machining of such stamping tools. The milling process has the advantage of high surface quality and fast machining, whereas the laser machining process is a very precise machining process. Additionally, laser machining has a certain limitation regarding the geometry to be achieved, for example, it is difficult to machine a slot, a slot or a cavity having straight sidewalls by laser beams. The present invention provides the method for enabling to selectively machine the different portions on the workpiece by different machining processes to obtain the final part having the target geometry.

The intermediate part is not the final part but the part requiring further machining. Thus, the intermediate geometry is defined to be applied for the first type of machining. The aim of the first type of machining is to achieve this intermediate geometry. In particular, the intermediate geometry is designed in a manner such that sufficient material is available on the intermediate part for being removed by the second type of machining.

In one variant, the milling process and laser machining process are conducted by the same machine tool. In particular, the measuring device is also integrated in the machine tool.

In another variant, the first type of machining, for example, milling process is conducted by a first machine tool and the second type of machining, for example, laser machining is conducted by a second machine tool. In particular, a 5-axis laser machining tool can be applied. EP 2301706 and EP 3047932 disclose such laser machining process using 5-axis laser machine tool.

In an advantageous variant, merely a part of the structure is machine by the second machine tool for laser machining to save machining time. Sometimes, not completely structure but only a particular part of the structure requires a very high accuracy. Thus, only this particular part is machined again by the second machine tool to achieve the high accuracy. Thus, the second machining tool is applied to selectively machine the structure. Selectively machining the structure by the second machine tool can further improve the quality of the produced part and at the same time save machining time.

Especially, the method further comprises inputting the measured geometry data into a processing unit and calculating a machining path based on the measured geometry data and the target geometry of the structure by the processing unit. Additionally, the measuring device can also measure surface roughness to determine the surface quality.

The measuring device is configured to be able to measure the whole part of the machined intermediate part, in particular the measuring device measures all the positions of the whole part.

The processing unit is configured to determine the difference between the machined intermediate machined part geometry and the target geometry. Determined difference allows computing the machining path for the second type of machining.

The processing unit may be an external computer or may be the control unit of the first machine tool or the second machine tool.

In some embodiments, the structure includes multiple depressions, each of which has two sidewalls and a bottom surface. In particular, the depressions may have high aspect ratio or low aspect ratio. Thus, the depression is one or more of the following: a hole, a slot, a pocket. Moreover, the slot is one or more of the following: a rectangular slot, a semi-circular slot, a T-slot. The slot may have a straight path or a curved path. In some embodiments, the stamping tool is applied for manufacturing a bipolar plate for fuel cell. The structure of the stamping tool includes multiple slots. The slots can be divided into different groups in accordance with their geometry. The slots in each group have the same geometry and the slots in different groups have different geometry, for example, different cross-section or different dimensions. Each slot has two sidewalls and a bottom surface. The cross-section of the slot can have various shapes, such as rectangular, semi-circular and trapezoid.

In some variants, the cross-section of the slot can vary along the longitudinal direction of the slot. In some variants, the depth of the slot can vary within one slot. In particular, the depth of the slot can vary along the longitudinal direction. Since the measuring device is configured to measure all the positions of the intermediate part, the differences between the target geometry and the intermediate part geometry at all the positions of the part can be precisely determined.

The method comprises the following steps: defining for each slot at least one target depth and at least one intermediate depth, wherein the intermediate depth is smaller than the target depth; machining the workpiece by milling process conducted by the first machine tool to obtain the intermediate part having multiple slots with the intermediate depth; measuring the machined intermediate part by the measuring device to obtain measured geometry data of the intermediate part; determining depth deviation data representing the difference between the machined intermediate part depth and the target depth based on the measured geometry data and the defined target geometry by the processing unit; and machining the bottom surface of the slot of the intermediate part by laser machining process based on the determined depth deviation data to obtain a final part having the structure with the target depth by removing the material on the bottom surface of the slot to eliminate the difference between the machined intermediate part depth and the target depth.

The bipolar plate made in metal for fuel cell has the advantage of the very good conductivity. However, the depth of the slot on the stamping tool must be machined in a high accuracy and high precision, since the deviation of the depth of the slot can cause corrosion on the bipolar plates. The depth of slots should be machined precisely, since the cross-section of all slots should not vary too much, in particular all slots should have same depth. Moreover, the depth of each slot should be machined accurately to achieve the defined depth. Milling process has a limit to achieve the required accuracy, which is for example +/- 1µm. This drawback can be compensated by the laser machining process, which is known as a high-accuracy and high-precision machining process. However, in order to maintain the machining sufficiency, only the slot is machined by the laser machine tool for correction. Preferably, only the bottom surface of the slot is machined by the laser machining process to correct the depth of the slots of the machined intermediate part to achieve the target depth. By this way, the machining time can be further optimized.

The measured depth data can be compared with the target depth and the deviation is determined. The deviation defines the thickness of the material, which to be removed from the bottom surface. For laser ablation, the remaining material can be divided into several layers and the ablation can be conducted layer by layer. If the bottom surface is too large to be machined at one position of the laser head, the bottom surface is divided into several so-called patches. For ablating the area defined in one patch, the laser head stays at the same position, the optical scanner moves the laser beam to ablate all the positions within one patch. In order to machine the next patch, the laser head is moved to another position.

If necessary, the laser head can rotate during machining of one patch to be able to ablate the positions on the workpiece, which are difficult to reach if the laser head doesn't rotate.

Additionally, the intermediate depth is less than the target depth such that there is surely enough remained material on the bottom surface of the slot for laser machining. The stamping tool manufacturing method of the present invention allows producing cost-effective and corrosion-resistant bipolar plates stamping tool thanks to milling roughing and laser finishing.

After milling, the measurement is conducted mechanically or optically. In particular, the measurement is conducted by a coordinator measuring machine, a touch probe, a laser distance sensor, a laser time of flight sensor, a confocal sensor, an interferometer, or an optical coherence tomography to determine the geometry data of the machined intermediate part. In particular, the slot depth of all slots of the intermediate part are measured and stored.

The geometry data of the intermediate part is obtained by measuring the intermediate part at all positions.

Difference between the geometry of the machined intermediate part and the target geometry is calculated based on the measured geometry data. This difference is corrected by further removing the material by applying the second type of machining. An efficient machining path can be computed by the processing unit, for example a computer and applied to control the machine tool to selectively remove the material of the machined intermediate part.

In one variant, the measurement is conducted in a machining pause during the machining by the first machine tool. If the measured depth reaches the defined intermediate depth, the machining process can be stopped. If the measured depth is less than the defined intermediate depth, the machining of milling can be continued. When the measurement is conducted in the machining pause, it is preferred to integrate the measuring device in the first machine tool or a tool changer can remove the cutting tool and mount the machining device into the first machine tool for measurement.

In another variant, the measurement is conducted at the end of the milling process.

It is considerable to arrange the measurement device at outside of the machine tool or integrated in the first machine tool or integrated in the second machine tool.

In one variant, multiple measuring devices are provided and integrated in the first machine tool and in the second machine tool. For example, a first measuring device is integrated in the first machine tool and the second measuring device is integrated in the second machine tool. This provides more flexibility for conducting the measurements and optimize the machining process.

Normally, the workpiece is clamped by a clamping system on the machine table. The clamping system includes a pallet and a chuck. The chuck is mounted on the machine table and the workpiece is mounted on the pallet. For easy handling, after the machining by the first machine tool the pallet with the intermediate part is automatically transferred from the first machine tool to the measuring device or to the second machine tool. This can save the time for dismounting and mounting the workpiece and ensures an accurate positioning of the workpiece on the machine table.

One drawback of the laser machining is that the laser beam has a certain width, thus when the laser beam hits the bottom surface of the slot, the laser beam cannot reach all the positions on the bottom surface, in particular the positions at the connecting edge of the sidewall and the bottom surface. In order to avoid this drawback and ensure the laser beam can reach the whole bottom surface of the slot, the machine table of the laser machine tool can be slightly tilted or rotated during the machining. Normally, the laser beam scanning is conducted by the optical scanner integrated in the machine head, thus, the machine table doesn't move during the laser scanning. However, by tilting and/or rotating the machining table during the machining, more positions can be reached by the laser beam. Thus, the second machine tool comprises a machine table for mounting the intermediate part thereon and during machining the machine table is tilted or rotated. In a preferred variant, if the part is too large or heavy, the laser head is tilted rotated not the part.

In further, the present invention is directed to a system for machining a stamping tool having a structure comprising the following steps: a first machine tool configured to machine the workpiece by milling process to obtain an intermediate part having the structure with a defined intermediate geometry; a measuring device configured to measure the intermediate part by to obtain geometry data of the intermediate part; and a second machine tool configured to machine the structure of the intermediate part by a laser machining process based on the measurement data to obtain a final part having the structure with a defined target geometry. In particular laser machining is a laser ablating process.

In one variant, the system includes a tool changer configured to replace the machining tool for milling mounted in the first machine tool by the measuring device.

The present invention provides a system for manufacturing a stamping tool for producing polar plates that allows a better accuracy in the production of slot geometry, hence highly improving the corrosion resistance of metallic polar plates produced by applying such stamping tool. Additionally, the system allows both viability of fuel cell engines and costeffective production of bipolar plates.

### BRIEF DESCRIPTION OF THE DRAWINGS

In the following, a more particular description of the present invention is further described. The embodiments are described and explained with details with reference to accompanying drawings in which:
- Fig.1: illustrates a three-dimensional view of a stamping tool including multiple slots;
- Fig.2: illustrates an enlarged part D shown in figure 1;
- Fig.3: illustrates a cross section of several slot;
- Fig.4: illustrates a top view of several slots;
- Fig.5: illustrates partially a cross-section of an intermediate part;
- Fig.6: illustrates partially a cross-section of a final part; and
- Fig.7: illustrates a diagram of the steps of the method.

### EXEMPLARY EMBODIMENTS

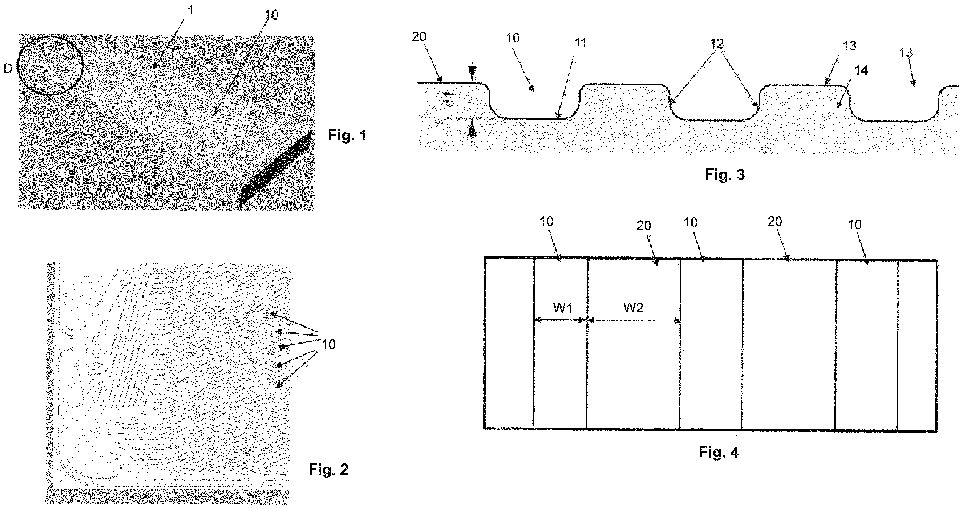

The figure 1 shows a three-dimensional view of a stamping tool 1 for manufacturing a bipolar plate for a fuel cell. The stamping tool is a metal plate having a a dimension of for example, length of 450mm, width 150mm and height of 30mm..... It comprises a plurality of slots 10 formed thereon. There are several groups of slots having different shapes and dimensions. In the subsequent descriptions, only one group of slots are explained to illustrate the application of the method of the present invention. However, the method can be applied for other groups of the slots, even they have different shape and dimension.

This group of slots run in parallel in the horizontal direction and have an equal distance as shown in the figure 2, which is an enlarged view of the part D indicated in the figure 1.

Figure 3 is a cross-section view and the figure 4 is a top view of several slots of this group. The slot has a rectangular cross-section with two sidewalls 12 and a bottom surface 11. As shown in figure 3, the slot has a defined slot width of W1, for example 1.25mm. The surface between two slots is called a rib 20, so the distance between two slots is called rib width denoted as W2 in the figure 4. The slot has also a defined slot depth d, which is the distance between the top surface of the rib and the bottom surface of the slot. The figure 3 shows a simplified example. However, the slots can have different depth. The depth within one slot can also vary. The rib can have a curved surface. The bottom surface of the slot can also have a cured surface.

The example shown here should not be understood as a limitation of the application of the method. This method can be also be applied for manufacturing other metal part having structures, which require high accuracy and precision. Such metal part can be produced by milling in combination with laser ablation.

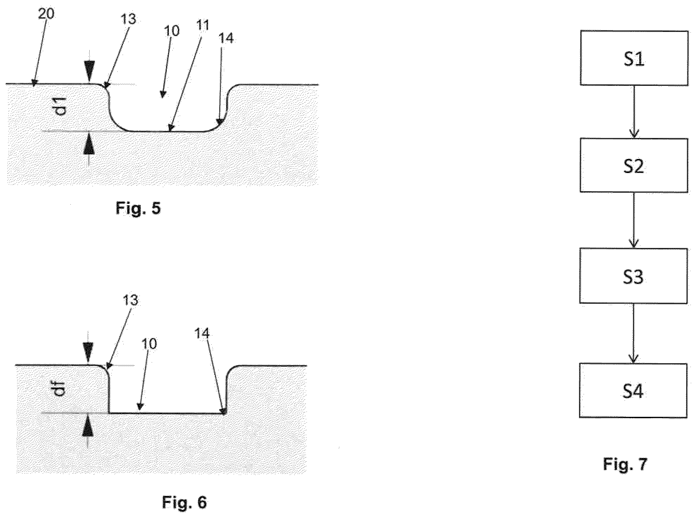

Figures 5 and 6 depict the cross-section of the one slot during different machining phases. A workpiece is provided and mounted in a first machine tool for milling process. It is also possible to first conduct surface machining and/or grinding of the workpiece, before it is milled. The first machine tool can be various machine tool being able to conduct milling process. The slots and the ribs are milled to achieve the defined intermediate depth d1. Alternatively, the first machine tool is a machine tool for grinding and milling.

Milling brings productivity to produce intermediate geometry, as well as very good surface quality on the surface, thus the ribs that will not be machined by the laser machining. Especially, it can machine straight walls and very good surfaces on the top round edges, which is very important for the stamping process. Thus, the ribs, the upper corner and the sidewalls of the slots are only machined by milling not by laser machining.

Figure 5 shows a machined intermediate part. The slot has two upper corners 13 and two lower corner 14 and a bottom surface 11. The depth of the slot of the machined intermediate part is not milled to reach the target depth but only milled to reach an intermediate slot depth of d1. The intermediate slot depth is defined before the machining and is less than the depth of the final part, which is defined as target slot depth. The milling is conducted in a way that the final surface roughness of the rib, slot upper corner are achieved.

A measuring device is applied to measure all the positions of the intermediate part to calculated the difference between the intermediate depth d1 and the target depth df. The intermediate depth is calculated by comparing the positions of the rib and the positions of the bottom surface.

Figure 6 is an illustration of a final part. Compare to the intermediate part, the slot of the final part is machined by a second machine tool, namely a laser machine tool. A 5-axix laser machine tool can be used. During this phase, the bottom surface of the slot is ablated by a laser beam to remove further material achieve the defined target depth of the slot. As shown in the figure 6, the final part has a larger depth than the intermediate part and the lower corners have a different shape caused by the laser machining. However, the shape of the lower corners are irrelevant for this application.

Figure 7 shows a flow chart of the method of the present invention. In a first step S1, the workpiece is milled by the first machine tool to obtain the intermediate part with the slots having intermediate depth. In a second step S2, the intermediate part is measured by the measuring device. It can be arranged at outside of machine tool or integrated in one of the first machine tool and the second machine tool. It is also considerable to integrate two measuring devices in both machine tools to be able to conduct the measurement during the machining. In a third step S3, the remaining depth is calculated by comparing the measured intermediate depth and the final depth. In a fourth step S4, the intermediate part is machined again by the laser machining machine tool to obtain slots having the final depth.

### LIST OF REFERENCES

- 1: stamping tool
- 2: workpiece
- 10: slot
- 11: slot bottom surface
- 12: slot side wall
- 13: slot lower corner
- 14: slot upper corner
- 20: rib of slot

## Claims

1. A method of manufacturing a stamping tool having (1) a structure (10), in particular a stamping tool for producing a bipolar plate for a fuel cell comprising the following steps:
a. defining for the structure a target geometry and an intermediate geometry, wherein the intermediate geometry defines the geometry of an intermediate part, which requires further machining to achieve the target geometry;
b. mounting a workpiece in a machine tool;
c. machining the workpiece by a first type of machining based on the defined intermediate geometry to obtain the intermediate part;
d. measuring the geometry of the machined intermediate part by a measuring device to obtain geometry data of the machined intermediate part;
e. determining a geometry deviation data representing the difference between the machined intermediate part geometry and the target geometry based on the measured geometry data and the defined target geometry by a processing unit;
f. computing a machining path based on the determined geometry deviation data by the processing unit; and
g. selectively machining the structure of the intermediate part by a second type of machining different than the first type of machining in accordance with the computed machining path to obtain a final part having the structure with the target geometry by removing the material on the intermediate part to eliminate the difference between the machined intermediate part geometry and the target geometry.

2. The method according to claim 1, wherein the first type of machining is milling and the second type of machining is laser-ablating machining.

3. The method according to claim 1 or 2, wherein the first type of machining is conducted by a first machine tool and the second type of machining is conducted by a second machine tool.

4. The method according one of claims 1 to 3, wherein machining the structure includes machining multiple depressions (10), each of which has two sidewalls and a bottom surface.

5. The method according to claim 4, wherein only the bottom surface of the depression is machined by the second type of machining.

6. The method according to claim 4 or 5, wherein machining the structure includes machining multiple slots (10).

7. The method according to claim 6, the method further comprises the following steps:
a. defining for each slot at least one target depth (df) and at least one intermediate depth (d1), wherein the intermediate depth is smaller than the target depth;
b. machining the workpiece by milling process conducted by the first machine tool to obtain the intermediate part having the multiple slots with the intermediate depth;
c. measuring the intermediate part by the measuring device to obtain measured geometry data of the intermediate part;
d. determining depth deviation data representing the difference between the machined intermediate part depth and the target depth based on the measured geometry data and the defined target geometry by the processing unit; and
e. machining the bottom surface of the slot of the intermediate part by laser machining based on the determined depth deviation data to obtain a final part having the structure with the target depth by removing the material on the bottom surface of the slot to eliminate the difference between the machined intermediate part depth and the target depth.

8. The method according to one of claims 1 to 7, wherein the measurement is conducted mechanically or optically, in particular the measurement is conducted by a coordinate measuring machine.

9. The method according to one of claims 1 to 8, wherein the measurement is conducted in a machining pause during the first type of machining or at the end of the first type of machining.

10. The method according to one of claims 2 to 9, wherein the measurement device is arranged at outside of the machine tool or integrated in the first machine tool or integrated in the second machine tool, in particular multiple measuring devices are integrated in the first machine tool and in the second machine tool.

11. The method according to one of claims 2 to 10, wherein the workpiece is clamped on a pallet and after the milling process the pallet with the intermediate part is automatically transferred from the first machine tool to the measuring device or to the second machine tool.

12. The method according to one of the claims 2 to 11, wherein the second machine tool comprises a machine table for mounting the intermediate part thereon and during machining the machine table is tilted or rotated.

13. The method according to one of the claims 3 to 12, wherein the second machine tool comprises a machining head including a galvanometer for emitting laser beam and during machining the machine head is rotated.

14. A system for manufacturing a stamping tool having a structure comprising:
a. a first machine tool configured to machine the workpiece by milling process to obtain an intermediate part having the structure with a defined intermediate geometry;
b. a measuring device configured to measure the intermediate part to obtain geometry data of the intermediate part; and
c. a second machine tool configured to machine the structure of the intermediate part by a laser machining process based on the measurement data to obtain a final part having the structure with a defined target geometry, in particular laser machining is a laser ablating process.

15. The system according to claim 14, wherein the measuring device is removeably integrated in the first machine tool or in the second machine tool.
